# FASCICULE DE BREVET EUROPEEN

(11) **EP 0 407 295 B1**
(45) Date de publication et mention de la délivrance du brevet: **15.10.1997**
(21) Numéro de dépôt: 90401925.4
(22) Date de dépôt: 03.07.1990
(51) Int. Cl.: G06F 11/00

(54) **Procédé d'observation de l'exécution d'un programme chargé dans un système informatique et dispositif pour la mise en oeuvre dudit procédé**
Verfahren zur Beobachtung eines in ein Rechnersystem geladenen Programms und Vorrichtung zur Durchführung des besagten Verfahrens
Method for observing the execution of a program loaded into a computer system and apparatus for implementing said method

(30) Priorité: 07.07.1989 FR 8909158
(43) Date de publication de la demande: 09.01.1991
(73) Titulaire: BULL S.A., 92800 Puteaux (FR)
(72) Inventeur: Claes, Gérard, F-91480 Quincy sous Senart (FR)
(74) Mandataire: Colombe, Michel

(56) Documents cités:
- EP-A- 0 084 431
- AT &T: UNIX System V User's Reference Manual", 1986, pages 218-222,286-287, Prentice-Hall, US
- IBM TECHNICAL DISCLOSURE BULLETIN, vol. 29, no. 7, décembre 1986, pages 3157-3158, New York, US; "Keysave/keyuse"
- WESCON'87, CONFERENCE RECORD, vol. 31, 1987, pages 27/3,1-5; B. SUNDERMEIER: "Real-time multiprocessing debugging"

## Description

D'une façon générale, l'invention concerne le suivi de l'exécution d'un programme chargé dans un système informatique défini, par exemple, par la configuration minimale suivante : une unité centrale, une mémoire centrale, un ou plusieurs périphériques d'entrée et/ou sortie, un système d'exploitation et, au choix de l'utilisateur, un ou plusieurs programmes d'application.

Il est connu d'observer l'exécution d'un programme d'application en cours de développement au moyen d'un logiciel de déverminage. De tels logiciels captent des informations instantanées qu'ils organisent souvent sous forme de table, comme cela est divulgué dans l'article de B. Sundermeier intitulé: "Real time multiprocessing debugging" publié dans WESCON '87, conference record, vol. 31, 1987, pages 27/3, 1-5.

Par ailleurs, certains systèmes d'exploitation tels que UNIX System V (voir UNIX system V User's reference Manual, par AT&T, publié par Prentice Hall, USA, 1986, pages 218-222 et 286-287) permettent de surveiller l'exécution d'une commande (i.e. d'un programme) ou de surveiller le contexte d'exploitation informatique de façon instantanée.

Depuis plusieurs années, l'utilisation de l'outil informatique évolue de plus en plus vers un mode convivial entre le système informatique et son utilisateur direct. En particulier, le mode convivial est utilisé pour assister en temps réel des utilisateurs non professionnels. Par exemple, de nombreux logiciels d'application présentent une fonction "AIDE" activée par une touche réservée du clavier. Toutefois, cette assistance est jusqu'à présent restée très limitée et très générale (sous la forme d'un répertoire ou d'un aide mémoire) par manque d'informations précises et instantanées sur l'état d'exécution du programme en service et sur le contexte d'exploitation de ce programme. Cette situation est particulièrement gênante dans le cadre d'applications où la convivialité présente une certaine importance, notamment l'autoformation ou la résolution d'incidents en cours d'exploitation.

Afin d'améliorer le suivi de l'exécution d'un programme chargé dans un système informatique, l'invention, qui est définie par les revendications ci-après, propose un procédé d'observation de l'exécution de ce programme caractérisé en ce que l'on procède au relevé, en des points prédéterminés du système, d'unités d'information instantanée concernant le programme en cours d'exécution et/ou son contexte d'exploitation informatique,
- de façon optionnelle, on traite certaines desdites unités d'information selon des procédures d'analyse préétablies,
- on mémorise une sélection d'unités d'information, traitées et/ou non traitées, selon une grille préétablie dans une table d'état TE,
- on autorise l'accès à la table d'état TE, notamment en mode lecture, à des programmes SER extérieurs au programme en cours d'exécution observé.

Dans un premier mode de mise en oeuvre du procédé selon l'invention :
- on associe la table d'état TE à un repère chronologique par rapport au programme en cours d'exécution observé et on maintient le contenu de la table d'état TE pendant un intervalle de temps au moins égal à une durée prédéterminée appelée cycle d'observation courant,
- on remet à jour tout ou partie de la table d'état TE de façon automatique par relevés successifs à chaque nouveau cycle d'observation.

Avantageusement, on garde en mémoire tout ou partie des tables d'état TE correspondantes des cycles d'observation antérieurs au cycle courant, selon une structure de tables ordonnées chronologiquement TANT (TANT1 à TANTN).

Ainsi donc, il est possible de mettre à la disposition d'une pluralité d'autres programmes, par exemple des logiciels de service, un historique de l'exécution en cours du programme observé. De plus, cette opération peut être réalisée de façon non perturbante pour le programme observé. En cas d'incident, les relevés effectués antérieurement à l'évènement perturbateur permettent le diagnostic et une résolution plus facile de l'incident.

En effet, dans les systèmes informatiques classiques, l'apparition de l'évènement perturbateur empêche très souvent le relevé ultérieur des informations nécessaires au système pour sa remise en état opérationel.

Dans un autre mode de mise en oeuvre de l'invention, on organise, dans ledit programme d'application, une zone de service travaillant en mode lecture et/ou écriture à partir de programmes extérieurs SER au programme d'application observé pour permettre l'entrée et la sortie du programme d'application d'informations ou d'instructions concernant le programme d'application observé et/ou son contexte d'exploitation informatique. Cette caractéristique est très intéressante dans les cas où il est opportun d'envoyer dans le système, notamment dans le programme d'application, des instructions dont les conditions d'exécution seront observées par l'interface pour permettre de porter un diagnostic et ensuite remettre en état opérationnel le système.

Dans encore un autre mode de mise en oeuvre du procédé selon l'invention, la table d'état TE est structurée à partir de champs principaux. Avantageusement la table d'état comporte au moins un champ principal choisi parmi les champs suivants :
Fonction (FO) : défini par la liste des dernières fonctions exécutées par le programme, et des fonctions en cours ou en voie d'exécution avec leur contexte ;
Système central (SC) : défini par l'état de certaines piles, registres et zones de mémoire du système central ;
Entrée (EN) : défini par les dernières données reçues des périphériques d'entrée avec leur contexte (par exemple les tests d'erreurs et/ou de validité);
Sortie (SO) : défini par les dernières données émises vers les périphériques de sortie avec leur contexte ;
Chrono (CH) : défini par des informations et/ou des analyses mettent en jeu la fonction "temps" (Vitesse d'exécution, de transfert, synchronisme, etc.) ;
Support (SU) : défini par des informations concernant le support matériel et logiciel du programme observé, notamment la configuration du système.

Cette structure de rangement selon une grille préétablie est particulièrement intéressante au niveau de la facilité d'accès pour les logiciels de service. Malgré la diversité des logiciels d'application susceptibles d'être observés, cette structure autorise également la mise en place de traitements standards par les logiciels de service du système.

L'invention concerne également un dispositif pour la mise en oeuvre des diverses variantes du procédé selon l'invention en association avec un système informatique présentant au moins une unité centrale, une mémoire centrale, des périphériques d'entrée et/ou de sortie, un système d'exploitation et au moins un programme d'application, ledit dispositif étant caractérisé en ce qu'il comporte de plus une interface d'observation présentant :
- des moyens formant capteurs d'information instantanée,
- des moyens de traitement de l'information instantanée,
- des moyens de mémorisation de l'information instantanée avant ou après traitement,
- des moyens de lecture de ladite information mémorisée, accessibles de l'extérieur du programme d'application en cours d'exécution observé.

Avantageusement, certains moyens formant capteurs sont associés à la mémoire centrale et/ou à des périphériques d'entrée et/ou de sortie, par exemple sous la forme de lecteurs de mémoire centrale et/ou de filtre clavier, de lecteur de mémoire écran, et/ou de lecteurs de saisie, et/ou de lecteur de mémoire tampon d'imprimante et/ou modem.

De plus, dans un autre mode de réalisation de l'invention, l'interface d'observation comporte des moyens de lecture et/ou d'écriture dans ledit programme d'application observé accessibles de l'extérieur de celui-ci.

L'invention est maintenant décrite en référence aux dessins ci-annexés dans lesquels :
- la figure 1 représente un système informatique classique sur lequel le procédé selon l'invention est susceptible d'être mis en oeuvre,
- la figure 2 représente un schéma de principe illustrant le procédé d'observation selon l'invention,
- et la figure 3 représente un schéma des tables de mémoire utilisées pour la mise en oeuvre du procédé selon l'invention.

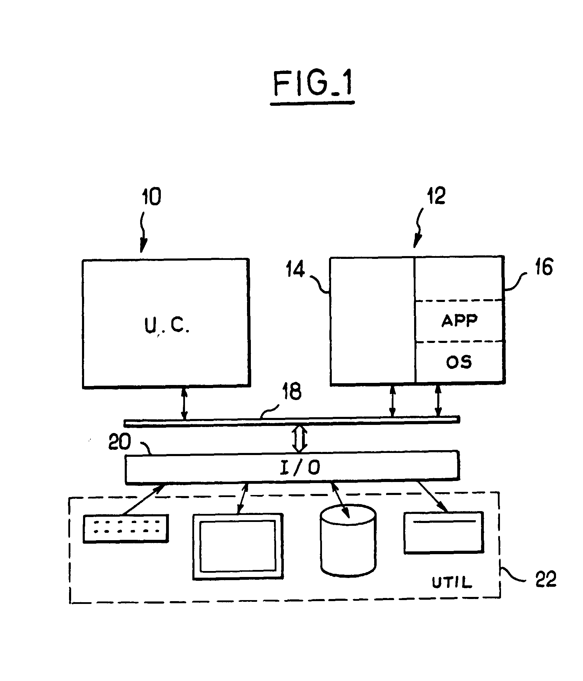

Le système informatique représenté sur la figure 1 d'architecture classique de type unitaire, comporte une unité centrale U.C. 10 et une mémoire centrale 12, elle-même divisée en mémoire morte (ROM) 14 et mémoire vive (RAM) 16, convenablement reliées par un bus de communication interne 18. Le sous-système central 10, 12 du système informatique communique avec un ensemble de périphériques d'entrée et/ou de sortie UTIL accessibles à l'utilisateur-opérateur du système par une unité d'entrée/sortie I/O 20 connectée au bus 18. A titre d'exemple non limitatif ont été représentés pour constituer l'ensemble UTIL quatre périphériques-types, plus particulièrement un clavier 22 (entrée), un écran 24 (entrée/sortie), une unité de mémoire auxiliaire à disque 26 (entrée/sortie) et une imprimante 28 (sortie).

De façon tout aussi classique, la gestion des périphériques d'entrée et de sortie est assurée par un ensemble de programmes appelé système d'exploitation OS convenablement chargé en mémoire vive 16 à l'aide de programmes d'initialisation résidant en mémoire morte 14. Sont également chargés en mémoire vive un ou plusieurs programmes d'application APP susceptibles d'être exécutés en mode unitaire ou en mode simultané selon les caractéristiques du système. En tout état de cause, l'ensemble des intéractions INTER entre l'utilisateur, les périphériques UTIL et le programme d'application APP est géré par le système d'exploitation OS.

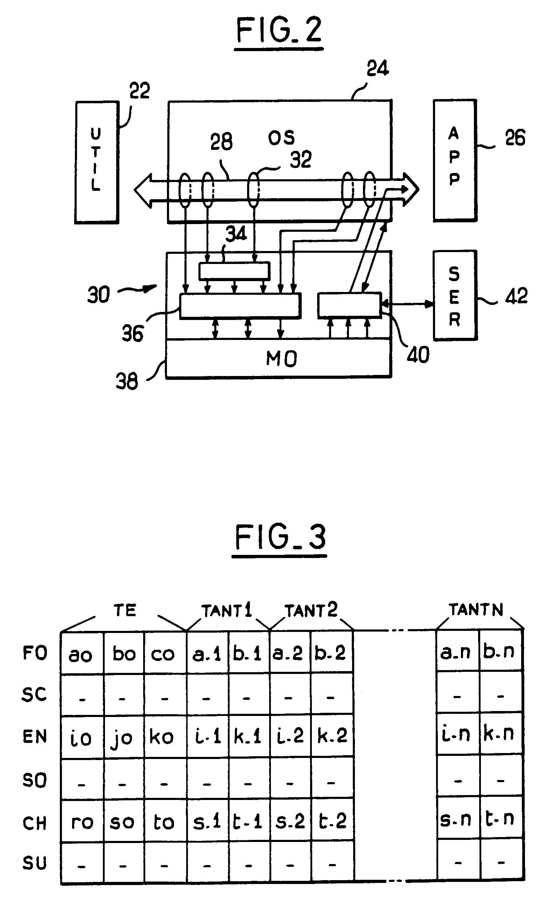

La figure 2 montre le schéma de principe illustrant le procédé d'assistance selon l'invention.

A la partie supérieure de la figure 2 on a représenté les trois blocs-diagrammes UTIL 22, OS 24 et APP 26 en tant qu'éléments du système informatique décrit ci-dessus. De plus l'ensemble des intéractions entre l'utilisateur, par le biais des périphériques UTIL 22, et du programme d'application APP 26 transite par le canal INTER (représenté par la double flèche 28), partie intégrante du système d'exploitation OS 24.

Selon l'invention, une interface d'observation 30 comporte des moyens formant capteurs d'unités d'information instantanée 32. Ces capteurs 32 représentés schématiquement à la figure 2, sont associés à la mémoire centrale et aux périphériques d'entrée et de sortie du système. Ils se présentent notamment sous la forme de programmes et/ou de circuits susceptibles de remplir les fonctions de lecteur de mémoire centrale, de filtre clavier, de lecteur de mémoire écran, de lecteur de souris, de lecteur de mémoire tampon d'imprimante et/ou de modem.

A côté des capteurs 32, l'interface d'observation 30 comporte des moyens de traitement 34 de l'information instantanée, des moyens de mémorisation de cette information instantanée avant ou après traitement, constitués d'un circuit contrôleur 36 et d'une mémoire d'observation MO 38 de type mémoire vive, et un module de contrôle 40 comportant des moyens d'accès à la mémoire d'observation 38, notamment des moyens de lecture de cette mémoire, à partir d'autres applications chargées dans le système notamment à partir du système d'exploitation lui-même 24 et de programmes de services SER 42 tels que, par exemple, un programme d'autoformation pour l'utilisateur et un programme de résolution d'incidents. Comme représenté sur la figure 2, le module de contrôle 40 communique de façon bidirectionnelle avec le système d'exploitation 24 et les programmes de services SER 42. En particulier, il comporte également des moyens d'écriture lui permettant d'envoyer directement au programme d'application 26 des informations et/ou des instructions.

La mémoire d'observation 38 est illustrée schématiquement à la figure 3. Elle comporte une table d'état TE représentative de l'état instantané de l'application en cours d'exécution dans son contexte informatique et des tables d'états antérieurs TANT (TANT1 à TANTN) dans lesquelles les informations correspondant à certaines rubriques sont rangées chronologiquement pour constituer un historique.

Les tables d'état TE et TANT sont structurées en champs principaux (par exemple le champ Fonction ou FO) eux-mêmes divisés en rubriques (a, b,..i, j, k,..). Les rubriques sont repérées d'un zéro pour la table TE (par exemple ao, bo) ou d'un indice -i pour la table TANTi (par exemple a-n, b-n pour la table TANTN). Dans l'exemple ici décrit à titre non limitatif, les champs principaux suivants sont utilisés :
1/ Fonction (FO) : défini par la liste des dernières fonctions exécutées par le programme APP observé, des fonctions en cours ou en voie d'exécution avec leur contexte (par exemple les paramètres des fonctions, les adresses de retour dans le programme, les interruptions associées, etc..);
2/ Système central (SC) : défini par l'état de certaines piles, registres, zones de mémoire du système central (unité centrale et mémoire centrale);
3/ Entrée (EN) : défini par les dernières données reçues des périphériques d'entrée avec leur contexte (par exemple les tests d'erreur et/ou de validité);
4/ Sortie (SO) : défini par les dernières données émises vers les périphériques de sortie avec leur contexte;
5/ Chronomètre (CH) : défini par des informations liées à la notion du temps (vitesse d'exécution, de transfert, de synchronisme, etc.);
6/ Support (SU) : défini par des informations concernant le contexte d'exploitation informatique du programme APP observé, en particulier le support matériel et logiciel du programme APP, par exemple la configuration du système, les espaces mémoires disponibles et/ou nécessaires pour l'application APP, les valeurs des tensions en certains points du système informatique, le code d'accès utilisateur, etc..

Ainsi donc toutes les rubriques des tables correspondant chacune à une unité d'information bien définie sont rangées selon une grille préétablie dans la mémoire d'observation MO pour former les tables TE et TANT. Il est à noter que les tables d'états antérieurs TANT ne comportent pas toutes les rubriques prévues dans la table TE mais se limitent en général aux seules rubriques pour lesquelles un historique présente un intérêt. Le contenu de ces rubriques, ou de certaines d'entre elles, pourra être lu de façon standardisé par les divers programmes de service SER sans perte de temps ni risque d'erreur d'adressage.

Le chargement de la mémoire d'observation 38 est effectué de la façon suivante :
Le circuit de contrôle 36, associé à un séquenceur relève, pour chaque cycle d'observation, le contenu des tampons de sortie des capteurs 32 et des tampons de sortie du circuit de traitement 34, puis procède à l'écriture des données relevées dans la table TE. De plus le circuit de contrôle 36 procède à la mise à jour des rubriques des tables TANT. Cette opération est réalisée selon deux procédures distinctes utilisées en fonction des caractéristiques de l'information contenue dans la rubrique concernée :
a) - dans le cas d'informations à caractère séquentiel ou continu (par exemple une valeur mesurée par un capteur) une remise à jour des rubriques concernées est effectuée de façon automatique par décalage à chaque nouveau cycle d'observation. Par exemple l'ordre d'écriture de la nouvelle valeur de la rubrique "so" concernant un compteur-chronomètre, déclenchera automatiquement le transfert préalable de la valeur contenue dans "so" vers la rubrique "s-1" de la table TANT1 et ainsi de suite jusqu'à la table TANTN.
b) - dans le cas d'informations à caractère aléatoire, par exemple la fin de l'exécution d'une fonction ou d'une commande prédéterminée, la mise à jour des tables TANT ne sera effectuée qu'après détection d'une différence entre la nouvelle valeur à prendre par le contenu de la rubrique concernée (par exemple une rubrique du champ FO) et la valeur actuelle du contenu de cette rubrique.

Au cours de chaque cycle d'observation et à l'issue de la phase de mise à jour, les tables TE et TANT sont accessibles en lecture par le système d'exploitation OS et par les programmes de services SER au travers d'un circuit approprié du module de contrôle 40.

Toutes les informations brutes relevées par les capteurs 32 ne sont pas automatiquement entrées dans la mémoire d'observation 38. Certaines sont utilisées comme données de base par les moyens de traitement 34 qui sont susceptibles d'effectuer les fonctions les plus variées au gré du concepteur de l'interface (opérations arithmétiques, statistiques, codage/décodage, interruptions logiques, etc..). L'utilisation appropriée des moyens de traitement 34 permet d'une part de gagner de la place dans la mémoire d'observation, d'autre part de pré-traiter certaines informations brutes pour les présenter sous une forme élaborée plus facilement assimilable par les programmes de service SER.

Il est intéressant de remarquer que le relevé des informations en provenance du programme d'application observé peut être effectué d'une part de façon non perturbante (l'interface d'observation étant transparente entre l'utilisateur et son application APP), d'autre part de façon continue sans attendre l'arrivée d'un évènement perturbateur (les informations nécessaires au système ou à l'utilisateur sont ainsi toujours disponibles par avance dans leur intégralité). Dans une variante du procédé selon l'invention ici décrit, on procède au chargement automatique d'une table d'adresses directement accessible de l'extérieur du programme observé et comportant les adresses instantanées de blocs concernant l'exécution du programme observé, notamment du code de la fonction en cours d'exécution et l'adresse du contenu du contexte instantané associé à ladite fonction. Cette organisation du programme d'application facilite et accélère les relevés par les capteurs 32 de l'interface 30. L'application est ainsi capable de s'expliquer elle-même et d'une façon standard sur ce qu'elle traite et dans quel contexte.

Pour terminer la présentation de l'invention, nous allons donner ci-après un exemple d'observation d'une application bureautique courante, un programme de traitement de texte, par l'interface d'observation selon l'invention. Dans cet exemple d'utilisation, l'interface est associée à un programme de service constitué par un système-expert d'autoformation de l'utilisateur à cette application.

Une erreur de manipulation fréquente chez les utilisateurs non professionnels de traitements de texte est l'activation involontaire ou incontrôlée de la fonction "aller à la fin du document". Il en résulte l'apparition d'un écran vide qui déroute l'utilisateur et conduit ce dernier à faire appel au système-expert d'autoformation.

Dès son activation le système-expert procèdera à la lecture des rubriques de la mémoire d'observation MO dont il a besoin pour porter son diagnostic et expliquer à l'utilisateur la disparition du texte à l'écran. En particulier seront lues les rubriques correspondant:
- à la dernière fonction exécutée ("aller en fin de document")
- à l'état du système central et du support informatique, par exemple au niveau des horloges et des tensions (ce qui montre que le système informatique est opérationnel)
- à l'état général d'exécution de l'application (absence d'indication d'erreur d'opération, par exemple : "fichier illisible" ou "insuffisance de capacité mémoire").

Le traitement de ces informations lues dans l'interface d'observation permettront au système-expert de conclure à l'activation inopinée de l'instruction "aller à la fin du document" et d'expliquer par un message sur écran que l'utilisateur a déplacé son texte vers le bas et qu'il a ainsi atteint la fin du document.

Dans le cas où l'utilisateur souhaite revenir à l'état antérieur, le système-expert recherchera dans la mémoire d'observation les dernières données frappées avant la manipulation erronée par exemple "ABCD" et s'en servira pour repositionner le curseur dans sa position antérieure. En cas de multiplicité de solutions (cas d'un texte répété) le système-expert propose les diverses possibilités à l'utilisateur.

D'une façon générale, grâce au procédé d'observation de l'exécution d'un programme selon l'invention et à son dispositif de mise en oeuvre, le système-expert d'autoformation est en mesure d'analyser les fonctions les plus utilisées, les fonctions utilisées à la place d'une autre, les données bien ou mal écrites, et éventuellement de donner des instructions à l'application (repositionnement du curseur, commandes d'exécution de fonctions pour démonstration, etc...), le module de contrôle travaillant dans ce dernier cas en mode écriture.

L'invention est également utilisable de façon très avantageuse avec un système-expert de type d'aide au diagnostic et à la résolution d'incidents dans le système, notamment dans le cadre de la maintenance participative. Ici encore, le système-expert de diagnostic procédera au fur et à mesure de ses besoins à la lecture dans la mémoire d'observation d'informations sur l'état global du système et son historique. Pour ce faire, il est souvent opportun de faire travailler le module de contrôle 40 en mode écriture dans le système d'exploitation 24 et/ou dans l'application et d'envoyer des informations et/ou des instructions de commande à exécuter (par exemple, commandes de tests de fonction). L'observation par l'interface 30 des conditions d'exécution de ces commandes permet de porter un diagnostic rapide et précis sur l'incident. Il est également possible d'utiliser le module de contrôle 40 en mode écriture pour envoyer les instructions de remise en l'état opérationnel du système informatique.

On notera pour finir que les informations disponibles dans les tables de la mémoire 38 sont localisées à des adresses bien déterminées et sont indifféremment accessibles à plusieurs systèmes-experts ou au système d'exploitation ou à d'autres programmes de service.

## Revendications

1. Procédé d'observation de l'exécution d'un programme chargé dans un système informatique comportant un système d'exploitation (OS), un programme d'application (APP) et un programme de service externe (SER) au programme d'application pour accéder à une mémoire d'observation, le procédé étant caractérisé en ce qu'il comporte les étapes suivantes :
- relevé en des points prédéterminés du système informatique, d'unités d'information instantanée concernant le programme en cours d'exécution et éventuellement son contexte d'exploitation informatique ;
- mémorisation selon une table d'état (TE) préétablie d'une sélection desdites unités d'information ;
- autorisation d'accès à la table d'état (TE), notamment en lecture par le programme de service externe (SER) au programme observé en cours d'exécution ;
- chargement automatique d'une table d'adresse accessible de l'extérieur du programme d'application observé et comportant les adresses instantanées de blocs d'information relatifs audit programme d'application
- organisation dans la mémoire d'une zone de service travaillant en mode lecture ou écriture à partir du programme de service externe (SER) au programme d'application observé pour permettre l'entrée et la sortie d'informations ou d'instructions concernant le programme d'application observé ou son contexte d'exploitation informatique.

2. Procédé selon la revendication 1, caractérisé en ce qu'il comporte en outre les étapes suivantes :
- association de la table d'état (TE) à un repère chronologique par rapport au programme observé en cours d'exécution et maintien du contenu de la table d'état (TE) pendant un intervalle de temps au moins égal à une durée prédéterminée appelé cycle d'observation courant
- remise à jour automatique de tout ou partie de la table d'état (TE) par relevés successifs à chaque nouveau cycle d'observation.

3. Procédé selon la revendication 2, caractérisé en ce qu'il comporte en outre une étape de mise en mémoire de tout ou partie des tables d'état (TE) correspondantes aux cycles d'observation antérieurs au cycle courant, selon une structure de tables d'états antérieurs ordonnées chronologiquement (TANT1 à TANTN).

4. Procédé selon la revendication 3, caractérisé en ce que l'on réalise le chargement automatique des tables (TANT1 à TANTN) par décalage à chaque nouveau cycle d'observation.

5. Procédé selon l'une des revendications précédentes, caractérisé en ce que la table d'état (TE) est structurée à partir des champs principaux eux-mêmes divisés en rubrique.

6. Procédé selon l'une des revendications précédentes caractérisé en ce que l'étape de mise à jour des tables (TANT1 à TANTN) ne s'effectuent que si une différence est détectée entre la nouvelle valeur à prendre en compte dans le contenu de la rubrique et la valeur actuelle du contenu de la rubrique d'un champ.

7. Procédé selon la revendication 6, caractérisé en ce que la table d'état (TE) comporte au moins un champ principal choisi parmi les champs suivants :
. Fonction (FO) : défini par la liste des dernières fonctions exécutées par le programme et des fonctions en cours ou en voie d'exécution et leur contexte
. Système central (SC) : défini par l'état de certaines piles, registres et zones de mémoire du système central ;
. Entrée (EN) : défini par les dernières données reçues des périphériques d'entrée avec leur contexte ;
. Sortie (SO) : défini par les dernières données émises vers les périphériques de sortie avec leur contexte
. Chrono (CH) : défini par des informations ou des analyses mettant en jeu la fonction temps
. Support (SU) : défini par des informations concernant le support matériel et logiciel du programme observé.

8. Procédé selon l'une des revendications précédentes, caractérisé en ce qu'il est mis en oeuvre au niveau du système d'exploitation du système informatique de façon transparente pour le programme observé.

9. Procédé selon l'une des revendications précédentes, caractérisé en ce qu'il comporte une étape de traitement d'unité d'information selon des procédures préétablies et la mémorisation des unités d'information traitées dans la grille préétablie.

10. Procédé selon la revendication 1, caractérisé en ce que la table d'adresse chargée comporte notamment l'adresse du code de la fonction en cours d'exécution et l'adresse du contenu du contexte instantané associé à ladite fonction.

11. Procédé selon l'une des revendications précédentes caractérisé en ce que les rubriques du champ fonction (FO) sont constituées par les paramètres des fonctions, les adresses de retour dans le programme, les interactions associées.

12. Procédé selon l'une des revendications précédentes caractérisé en ce que les rubriques du champ principal système central (SC) sont constituées par des informations sur l'unité centrale et la mémoire centrale.

13. Procédé selon l'une des revendications précédentes, caractérisé en ce que les rubriques du champ principal entrée (EN) sont constituées par des tests d'erreur et des tests de validité.

14. Procédé selon l'une des revendications précédentes, caractérisé en ce que les rubriques du champ principal chronomètre (CH) sont constituées par les informations liées à la vitesse d'exécution, la vitesse de transfert et au synchronisme.

15. Procédé selon l'une des revendications précédentes, caractérisé en ce que les rubriques associées au champ principal support (SU) sont constituées par la configuration du système, les espaces mémoire disponibles et nécessaires pour l'application (APP), les valeurs des tensions à un certain point du système informatique, le code d'accès utilisateur.

16. Dispositif pour mettre en oeuvre le procédé défini selon l'une des revendications précédentes en association avec un système informatique présentant au moins une unité centrale (10), une mémoire centrale (12), au moins un périphérique d'entrée et/ou de sortie (22) échangeant des données avec l'unité de traitement centrale, un système d'exploitation (OS), au moins un programme d'application (APP) en cours d'exécution et un programme de service externe au programme (SER) au programme d'application, ledit dispositif étant caractérisé en ce qu'il comporte de plus une interface d'observation (30) présentant :
- des capteurs (32) comportant des tampons pour des informations instantanées, lesdits capteurs étant associés à la mémoire centrale ou aux périphériques d'entrée ou de sortie du système,
- des moyens de traitement (34) de l'information instantanée comportant des tampons,
- un circuit de contrôle (36) associé à un séquenceur pour relever à chaque cycle d'observation le contenu des tampons,
- des moyens de mémorisation (38) de l'information instantanée avant ou après traitement et constituant la mémoire d'observation,
- des moyens de lecture (40) de ladite information mémorisée accessibles de l'extérieur du programme d'application observé en cours d'exécution.

17. Dispositif selon la revendication 16, caractérisé en ce que lesdits moyens formant capteurs (32) se présentent sous la forme de lecteur de mémoire centrale, ou de filtre clavier, ou de lecteur de mémoire écran, ou de lecteur de souris, ou de lecteur de mémoire tampon d'imprimante, ou de modem

18. Dispositif selon la revendication 16, caractérisé en ce que l'interface d'observation comporte des moyens de lecture ou d'écriture (40) dans ledit programme d'application observé accessibles de l'extérieur de celui-ci.

## Patentansprüche

1. Verfahren zum Beobachten der Ausführung eines Programms, das in ein Datenverarbeitungssystem geladen ist, das ein Betriebssystem (OS), ein Anwendungsprogramm (APP) und ein bezüglich des Anwendungsprogramms externes Dienstprogramm (SER) für den Zugriff auf einen Beobachtungsspeicher enthält, wobei das Verfahren dadurch gekennzeichnet ist, daß es die folgenden Schritte enthält:
- Abgreifen von das momentan ausgeführte Programm und eventuell seinen Datenauswertungskontext betreffenden momentanen Informationseinheiten an vorgegebenen Punkten des Datenverarbeitungssystems;
- Speichern einer Auswahl der Informationseinheiten gemäß einer im voraus erstellten Zustandstabelle (TE);
- Zulassen des Zugriffs auf die Zustandstabelle (TE), insbesondere zum Lesen durch das bezüglich des beobachteten momentan ausgeführten Programms externe Dienstprogramm (SER);
- automatisches Laden einer Adressentabelle, auf die von außerhalb des beobachteten Anwendungsprogramms zugegriffen werden kann und die die momentanen Adressen von Informationsblöcken, die auf das Anwendungsprogramm bezogen sind, enthält;
- Organisation einer im Lese- oder Schreibmodus arbeitenden Dienstzone im Speicher ausgehend von dem bezüglich des beobachteten Anwendungsprogramms externen Dienstprogramm (SER), um die Eingabe und die Ausgabe von das beobachtete Anwendungsprogramm oder seinen Datenauswertungskontext betreffenden Informationen oder Befehlen zu ermöglichen.

2. Verfahren nach Anspruch 1, dadurch gekennzeichnet, daß es außerdem die folgenden Schritte enthält:
- Einordnen der Zustandstabelle (TE) in ein zeitliches Bezugssystem in bezug auf das beobachtete momentan ausgeführte Programm und Halten des Inhalts der Zustandstabelle (TE) während eines Zeitintervalls, das wenigstens gleich einer vorgegebenen Dauer ist und momentaner Beobachtungszyklus genannt wird;
- automatisches Aktualisieren der gesamten Zustandstabelle (TE) oder eines Teils derselben durch aufeinanderfolgende Abgriffe in jedem neuen Beobachtungszyklus.

3. Verfahren nach Anspruch 2, dadurch gekennzeichnet, daß es außerdem einen Schritt des Speicherns aller Zustandstabellen (TE) oder eines Teils derselben, die den dem momentanen Zyklus vorhergehenden Beobachtungszyklen entsprechen, in einer zeitlich geordneten Struktur früherer Zustandstabellen (TANT1 bis TANTN).

4. Verfahren nach Anspruch 3, dadurch gekennzeichnet, daß das automatische Laden der Tabellen (TANT1 bis TANTN) durch Verschieben in jedem neuen Beobachtungszyklus verwirklicht wird.

5. Verfahren nach irgendeinem der vorangehenden Ansprüche, dadurch gekennzeichnet, daß die Zustandstabelle (TE) anhand von Hauptfeldern strukturiert ist, die ihrerseits in Rubriken unterteilt sind.

6. Verfahren nach einem der vorangehenden Ansprüche, dadurch gekennzeichnet, daß der Schritt der Aktualisierung der Tabellen (TANT1 bis TANTN) nur dann ausgeführt wird, wenn zwischen dem im Inhalt der Rubrik zu berücksichtigenden neuen Wert und dem momentanen Wert des Inhalts der Rubrik eines Feldes eine Differenz festgestellt wird.

7. Verfahren nach Anspruch 6, dadurch gekennzeichnet, daß die Zustandstabelle (TE) wenigstens ein aus den folgenden Feldern gewähltes Hauptfeld enthält:
- Funktion (FO): definiert durch die Liste der letzten vom Programm ausgeführten Funktionen und der laufenden oder der bald ausgeführten Funktionen und durch ihren Kontext;
- Zentralsystem (SC): definiert durch den Zustand bestimmter Stapel, Register und Zonen des Speichers des Zentralsystems;
- Eingang (EN): definiert durch die letzten Daten, die von den Eingangsperipherieeinrichtungen mit ihrem Kontext empfangen wurden;
- Ausgang (SO): definiert durch die letzten Daten, die an die Ausgangsperipherieeinrichtungen mit ihrem Kontext gesendet werden;
- Zeit (CH): definiert durch Informationen oder Analysen, die die Zeitfunktion verwenden;
- Träger (SU): definiert durch die Informationen, die den Hardware- und den Softwareträger des beobachteten Programms betreffen.

8. Verfahren nach einem der vorangehenden Ansprüche, dadurch gekennzeichnet, daß es auf Höhe des Betriebssystems des Datenverarbeitungssystems in für das beobachtete Programm transparenter Weise ausgeführt wird.

9. Verfahren nach einem der vorangehenden Ansprüche, dadurch gekennzeichnet, daß es einen Schritt der Verarbeitung einer Informationseinheit gemäß im voraus erstellter Prozeduren sowie die Speicherung von verarbeiteten Informationseinheiten in dem im voraus erstellten Raster enthält.

10. Verfahren nach Anspruch 1, dadurch gekennzeichnet, daß die geladene Adressentabelle insbesondere die Adresse des Codes der momentan ausgeführten Funktion sowie die Adresse des Inhalts des der Funktion zugeordneten momentanen Kontexts enthält.

11. Verfahren nach einem der vorangehenden Ansprüche, dadurch gekennzeichnet, daß die Rubriken des Funktionsfeldes (FO) durch die Parameter von Funktionen, die Adressen für den Rücksprung in das Programm und die zugeordneten Wechselwirkungen gebildet sind.

12. Verfahren nach einem der vorangehenden Ansprüche, dadurch gekennzeichnet, daß die Rubriken des Hauptfeldes Zentralsystem (SC) durch Informationen über die Zentraleinheit und den Hauptspeicher gebildet sind.

13. Verfahren nach einem der vorangehenden Ansprüche, dadurch gekennzeichnet, daß die Rubriken des Hauptfeldes Eingang (EN) durch Fehlerprüfungen und Validitätsprüfungen gebildet sind.

14. Verfahren nach einem der vorangehenden Ansprüche, dadurch gekennzeichnet, daß die Rubriken des Hauptfeldes Zeitmesser (CH) durch die Informationen gebildet sind, die mit der Ausführungsgeschwindigkeit, der Übertragungsgeschwindigkeit und dem Synchronismus in Beziehung stehen.

15. Verfahren nach einem der vorangehenden Ansprüche, dadurch gekennzeichnet, daß die dem Hauptfeld Träger (SU) zugeordneten Rubriken durch die Systemkonfiguration, den verfügbaren und für die Anwendung (APP) notwendigen Speicherplatz, die Spannungswerte an einem bestimmten Punkt des Datenverarbeitungssystems und den Anwenderzugriffscode gebildet sind.

16. Vorrichtung zum Ausführen des Verfahrens nach einem der vorangehenden Ansprüche in Verbindung mit einem Datenverarbeitungssystem, das wenigstens eine Zentraleinheit (10), einen Hauptspeicher (12), wenigstens eine Eingangs- und/oder Ausgangsperipherieeinrichtung (22), die mit der Zentraleinheit Daten austauscht, ein Betriebssystem (OS), wenigstens ein momentan ausgeführtes Anwendungsprogramm (APP) und ein bezüglich des Anwendungsprogramms externes Dienstprogramm (SER) aufweist, wobei die Vorrichtung dadurch gekennzeichnet ist, daß sie außerdem eine Beobachtungsschnittstelle (30) enthält, die umfaßt:
- Erfassungseinrichtungen (32), die Puffer für die momentanen Informationen enthalten, wobei die Sensoren dem Hauptspeicher oder den Eingangs- oder Ausgangsperipherieeinrichtungen des Systems zugeordnet sind,
- Verarbeitungsmittel (34) für die momentane Information, die Puffer enthalten,
- eine Steuerschaltung (36), der eine Ablaufsteuerung zugeordnet ist, um in jedem Beobachtungszyklus den Inhalt der Puffer abzufragen,
- Speichermittel (38) für die momentane Information vor oder nach der Verarbeitung, die den Beobachtungsspeicher bilden,
- Lesemittel (40) für die gespeicherte Information, auf die von außerhalb des beobachteten momentan ausgeführten Anwendungsprogramms zugegriffen werden kann.

17. Vorrichtung nach Anspruch 16, dadurch gekennzeichnet, daß die die Erfassungseinrichtungen (32) bildenden Mittel die Form einer Leseeinrichtung für den Hauptspeicher oder eines Tastaturfilters oder einer Leseeinrichtung für den Bildschirmspeicher oder einer Leseeinrichtung für die Maus oder einer Leseeinrichtung des Drucker-Pufferspeichers oder eines Modems besitzen.

18. Vorrichtung nach Anspruch 16, dadurch gekennzeichnet, daß die Beobachtungsschnittstelle Mittel (40) zum Lesen oder Schreiben im beobachteten Anwendungsprogramm enthält, auf die von außerhalb desselben zugegriffen werden kann.

## Claims

1. Method for observing the execution of a program loaded in a computer system comprising an operating system (OS), an application program (APP) and a service program (SER) external to the application program in order to access an observation memory, the method being characterised in that it comprises the following steps:-
- recording, at predetermined points of the computer system, of units of instantaneous information concerning the program currently being executed and if appropriate its computer operation context;
- storage according to a pre-established status table (TE) of a selection of said units of information;
- authorisation to access the status table (TE), particularly by reading via the service program (SER) external to the observed program currently being executed;
- automatic loading of an address table accessible from outside the application program observed, and containing the instantaneous addresses of information blocks relating to said application program;
- organisation in the memory of a service zone working in read or write mode on the basis of the service program (SER) external to the application program observed in order to allow the input and output of information or instructions concerning the application program observed or its computer operation context.

2. Method according to Claim 1, characterised in that it further comprises the following steps:
- association of the status table (TE) with a chronological marker in relation to the observed program currently being executed and maintenance of the content of the status table (TE) during a time interval at least equal to a predetermined period known as the current observation cycle.
- automatic updating of all or part of the status table (TE) by successive recordings at each new observation cycle.

3. Method according to Claim 2, characterised in that it further comprises a step of transferring to memory all or part of the status tables (TE) corresponding to the observation cycles prior to the current cycle, according to a structure of previous status tables in chronological order (TANT1 to TANTN).

4. Method according to Claim 3, characterised in that the automatic loading of the tables (TANT1 to TANTN) is performed by offsetting at each new observation cycle.

5. Method according to one of the preceding claims, characterised in that the status table (TE) is structured on the basis of the principal fields, themselves divided into headings.

6. Method according to one of the preceding claims, characterised in that the step of updating the tables (TANT1 to TANTN) only takes place if a difference is detected between the new value to be used in the content of the heading and the current value of the content of the heading of a field.

7. Method according to Claim 6, characterised in that the status table (TE) contains at least one principal field chosen from among the following fields:
. Function (F0): defined by the list of the latest functions executed by the program and the functions in progress or being executed and their context;
. Central system (SC): defined by the status of certain stacks, registers and memory zones of the central system;
. Input (EN): defined by the latest data received from the input peripherals, together with their context;
. Output (S0): defined by the latest data sent to the output peripherals, together with their context;
. Chrono (CH): defined by information or analyses involving the time function;
. Support (SU): defined by information concerning the hardware and software support of the program observed.

8. Method according to one of the preceding claims, characterised in that it is implemented at the level of the operating system of the computer system in a manner that is transparent for the program observed.

9. Method according to one of the preceding claims, characterised in that it comprises a step of processing an information unit according to preestablished procedures and the storage of the processed information units in the preestablished grid.

10. Method according to Claim 1, characterised in that the loaded address table comprises in particular the address of the code of the function currently being executed and the address of the content of the instantaneous context associated with said function.

11. Method according to one of the preceding claims characterised in that the headings of the function field (F0) are constituted by the parameters of the functions, the addresses for return to the program, the associated interactions.

12. Method according to one of the preceding claims characterised in that the headings of the principal central system field (SC) are constituted by information on the central unit and the central memory.

13. Method according to one of the preceding claims, characterised in that the headings of the principal input field (EN) are constituted by error tests and validity tests.

14. Method according to one of the preceding claims, characterised in that the headings of the principal chronometer field (CH) are constituted by information linked with the execution speed, the transfer speed and with the synchronism.

15. Method according to one of the preceding claims, characterised in that the headings associated with the principal support field (SU) are constituted by the system configuration, the memory spaces available and required for the application (APP), the values of voltages at a certain point in the computer system, the user access code.

16. Device for implementing the method defined according to one of the preceding claims, in association with a computer system having at least one central unit (10), one central memory (12), at least one input and/or output peripheral (22) exchanging data with the central processing unit, an operating system (OS), at least one application program (APP) currently being executed and a service program external to the program (SER) to the application program, said device being characterised in that it further comprises an observation interface (30) having:
- sensors (32) comprising buffers for instantaneous information, said sensors being associated with the central memory or with the input or output peripherals of the system,
- means (34) for processing the instantaneous information, comprising buffers,
- a control circuit (36) associated with a sequencer for recording the content of the buffers at each observation cycle,
- means (38) for storing the instantaneous information before or after processing and constituting the observation memory,
- means (40) for reading said stored information that are accessible from outside the observed application program that is currently being executed.

17. Device according to Claim 16, characterised in that said means forming sensors (32) take the form of a central memory reader, or a keyboard filter, or a screen memory reader, or a mouse reader, or a printer buffer memory reader, or a modem.

18. Device according to Claim 16, characterised in that the observation interface comprises means (40) for reading from or writing to said observed application program that are accessible from outside the latter.
